# EUROPÄISCHE PATENTSCHRIFT

(11) **EP 3 324 103 B1**
(45) Veröffentlichungstag und Bekanntmachung des Hinweises auf die Patenterteilung: **16.06.2021**
(21) Anmeldenummer: 16199976.8
(22) Anmeldetag: 22.11.2016
(51) Int. Cl.: F21S 43/145, F21S 43/20, G02B 30/26, H04N 13/305

(54) **FAHRZEUGLEUCHTE MIT LICHTFUNKTION MIT TIEFENWIRKUNG**
VEHICLE LAMP WITH AN ILLUMINATING FUNCTION HAVING AN EFFECT OF DEPTH
PHARE DE VÉHICULE AVEC FONCTION D'ÉCLAIRAGE À ACTION EN PROFONDEUR

(43) Veröffentlichungstag der Anmeldung: 23.05.2018
(73) Patentinhaber: odelo GmbH, 70329 Stuttgart (DE)
(72) Erfinder: HELLER, Andreas, 70197 Stuttgart (DE)
(74) Vertreter: Benninger, Johannes

(56) Entgegenhaltungen:
- WO-A1-2016/191321
- WO-A1-2016/191321
- DE-A1-102012 107 082
- DE-A1-102014 108 435
- DE-A1-102014 116 180
- DE-U1-202012 102 603
- KR-A- 20160 049 726
- US-A1- 2008 151 369
- US-A1- 2015 043 234
- US-A1- 2015 377 441
- US-A1- 2019 143 566

## Beschreibung

Die Erfindung betrifft eine Fahrzeugleuchte.

Insbesondere beschäftigt sich die Erfindung mit der Verbesserung der Sicht- und Wahrnehmbarkeit von Lichtfunktionen einer Fahrzeugleuchte, insbesondere einer Heckleuchte für ein Kraftfahrzeug.

Eine Fahrzeugleuchte umfasst beispielsweise einen im Wesentlichen von einem Leuchtengehäuse und einer Lichtscheibe umschlossenen Leuchteninnenraum und mindestens ein darin beherbergtes, mindestens eine Lichtquelle umfassendes Leuchtmittel für wenigstens eine Lichtfunktion der Fahrzeugleuchte.

Jede Fahrzeugleuchte erfüllt je nach Ausgestaltung eine oder mehrere Aufgaben bzw. Funktionen. Zur Erfüllung jeder Aufgabe bzw. Funktion ist eine Lichtfunktion der Fahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Rücklichtfunktion, zur Sicherstellung einer Sichtbarkeit des Fahrzeugs bei Tag und/oder Nacht, wie etwa bei einer Ausgestaltung als Heckleuchte oder Tagfahrleuchte. Beispiele für Fahrzeugleuchten sind am Fahrzeugbug, an den Fahrzeugflanken und/oder an den Seitenspiegeln sowie am Fahrzeugheck angeordnete Blinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Jede Lichtfunktion muss dabei eine beispielsweise gesetzlich vorgegebene Lichtverteilung erfüllen. Die Lichtverteilung legt dabei mindestens einzuhaltende, umgangssprachlich als Helligkeit bezeichnete Lichtströme in zumindest einzuhaltenden Raumwinkelbereichen fest.

Für die einzelnen Lichtfunktionen sind zum Teil unterschiedliche Helligkeiten bzw. Sichtweiten sowie zum Teil unterschiedliche Lichtfarben zugeordnet.

Wenigstens einer Lichtquelle des Leuchtmittels einer Fahrzeugleuchte können ein oder mehrere zur Ausformung einer Lichtverteilung beitragende Optikelemente zur Lichtlenkung zugeordnet sein.

Die Lichtscheibe ist durch eine heutzutage meist aus einem Kunststoff hergestellte, transparente Abdeckung gebildet, welche den Leuchteninnenraum abschließt und die darin beherbergten Bauteile, wie etwa ein oder mehrere Leuchtmittel, Reflektoren sowie alternativ oder zusätzlich vorgesehene Optikelemente gegen Witterungseinflüsse schützt.

Das Leuchtengehäuse bzw. der Leuchteninnenraum kann in mehrere Kammern mit jeweils eigenen Lichtquellen und/oder Leuchtmitteln und/oder Optikelementen sowie gegebenenfalls Lichtscheiben unterteilt sein, von denen mehrere Kammern gleiche und/oder jede Kammer eine andere Lichtfunktionen erfüllen kann.

Bei den erwähnten Optikelementen kann es sich um wenigstens einen Reflektor und/oder um mindestens eine Linse und/oder um eine oder mehrere im Strahlengang zwischen wenigstens einer Lichtquelle des Leuchtmittels und der Lichtscheibe angeordnete Optikscheiben oder dergleichen handeln.

Beispielsweise kann in dem Leuchteninnenraum mindestens ein hinter wenigstens einer Lichtquelle zumindest eines Leuchtmittels angeordneter Reflektor untergebracht sein. Der Reflektor kann zumindest zum Teil durch ein separates Bauteil und/oder durch wenigstens einen Teil des Leuchtengehäuses selbst gebildet sein, beispielsweise vermittels einer zumindest teilweisen, reflektierenden Beschichtung.

Die Lichtscheibe selbst kann alternativ oder zusätzlich als ein Optikelement ausgebildet sein, beispielsweise indem sie vorzugsweise an deren Innenseite mit einer zur Erzeugung einer oder mehrerer zuvor erwähnter Lichtverteilungen beitragenden optischen Struktur versehen ist. Hierdurch kann gegebenenfalls auf eine Optikscheibe verzichtet werden.

Beispiele für Fahrzeugleuchten sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Eine solche Kombination ist beispielsweise regelmäßig in den bekannten Heckleuchten verwirklicht. In diesen kommen beispielsweise Wiederholblinkleuchten, Begrenzungsleuchten, Bremsleuchten, Nebelleuchten sowie Rückfahrleuchten zum Einsatz, um nur eine von vielen in Heckleuchten verwirklichten Kombinationen zu nennen. Weder erhebt diese Aufzählung Anspruch auf Vollständigkeit, noch bedeutet dies, dass in einer Heckleuchte alle genannten Leuchten kombiniert werden müssen. So können beispielsweise auch nur zwei oder drei der genannten oder auch anderer Leuchten in einem gemeinsamen Leuchtengehäuse einer Heckleuchte miteinander kombiniert sein.

Um die Wahrnehmbarkeit beziehungsweise Wahrnehmungskraft von Lichtfunktionen einer Fahrzeugleuchte für andere Verkehrsteilnehmer zu erhöhen ist bekannt, diese innerhalb der gesetzlich zugelassenen Grenzen aufleben zu lassen.

Ein bekanntes Beispiel sind so genannte dynamische Lichtfunktionen, bei denen die vom Gesetzgeber eingeräumte Zeit, die eine Glühlampe als eine gesetzlich erlaubte Lichtquelle eines zur Erfüllung einer Lichtfunktion vorgesehenen Leuchtmittels benötigt, um ihre volle Leuchtstärke zu erreichen, genutzt wird, um einen visuellen Effekt zu erzielen.

Ein Beispiel eines solchen visuellen Effekts ist das Wischen in Richtung der Richtung einer beabsichtigten Fahrtrichtungsanzeige bei einer Wiederholblinklichtfunktion eines Fahrtrichtungsanzeigers. Untersuchungen haben gezeigt, dass hierdurch die Verkehrssicherheit erhöht wird, da durch das Wischen bereits bei Beginn der Wahrnehmung der Lichtfunktion durch andere Verkehrsteilnehmer die durch die Lichtfunktion angezeigte beabsichtigte Fahrtrichtungsänderung von den anderen Verkehrsteilnehmern erkannt wird.

Ferner ist bekannt, dass Leuchtanzeigen, beispielsweise in einem Armaturenbrett eines Fahrzeugs angezeigte Warnanzeigen, die mit ihrem Aufleuchten dem Betrachter entgegen zu springen scheinen, durch ihre scheinbare Bewegung auf den Betrachter zu von diesem besonders gut wahrgenommen werden und diesen alarmieren, auch wenn dessen Blick nicht unmittelbar auf einen Bereich gerichtet ist, in dem die Warnanzeige angezeigt wird. Sie haben daher eine erhöhte Wahrnehmungskraft zur Folge.

Durch DE 10 2013 021 053 A1 ist bekannt, auf einer Lichteintrittsfläche einer Tertiäroptik einer Leuchte zur Ausleuchtung von Gebäudeflächen eine Vielzahl von Lentikularlinsen anzuordnen, um eine starke Aufspreizung einer engen, zuvor parallelen Lichtverteilung zu erhalten. Unter Lentikularlinsen werden hierbei insbesondere langgestreckte, linsenförmige Elemente als Bestandteil der Oberfläche der Tertiäroptik verstanden, die durch eine Teilfläche eines Kreiszylinders gebildet oder von einer Teilfläche eines Kreiszylinders bereitgestellt sind. Ein auf eine Tertiäroptik mit als Lentikularlinsen ausgebildeten Verbreiterungsmitteln auftreffendes paralleles Lichtstrahlenbündel wird um einen vorgegebenen Betrag, d. h. auf einen bestimmten Lichtabstrahlwinkel hin, aufgespreizt. Die Lentikularlinsen erstrecken sich entlang der gesamten Breite der Tertiäroptik zylindrisch fort. Von einer voranstehenden Kollimatoroptik zu einem parallelen oder im Wesentlichen parallelen Lichtstrahlenbündel gebündeltes Licht, welches eine sehr enge Lichtverteilung aufweist, trifft auf die als Verbreiterungsmittel vorgesehenen Lentikularlinsen und wird hierdurch verbreitert. Es ergibt sich eine Lichtabstrahlung entlang einer Ebene unter einem Winkel α von etwa 80°, auf welcher Ebene die Zylinderachsen der Lentikularlinsen normal aufstehen.

Durch KR 20160049726A ist eine Leuchtvorrichtung für Fahrzeuge mit einen wenigstens zum Teil von einem Leuchtengehäuse und einer Lichtscheibe umschlossenen Leuchteninnenraum und mindestens einem in dem Leuchteninnenraum zumindest teilweise beherbergten, zur Erfüllung wenigstens einer Lichtfunktion der Leuchtvorrichtung vorgesehenen oder einer vorgeschriebenen Lichtverteilung einer solchen Lichtfunktion beitragenden Leuchtmittel mit zumindest einer Lichtquelle bekannt. Sie umfasst ein von mindestens einer Lichtquelle eines zur Erfüllung der entsprechenden Lichtfunktion vorgesehenen oder einer vorgegebenen Lichtverteilung der Lichtfunktion beitragenden Leuchtmittels hinterleuchtetes Rasterbild, welches bei einem von außerhalb des Leuchteninnenraums durch die Lichtscheibe hindurch blickenden Betrachter einen autostereoskopischen Effekt mit entsprechender Tiefenwirkung oder hervortretender Wirkung einhergehend mit der Wahrnehmung einer räumlichen Gestalt der Lichtfunktion erzeugt.

Durch DE 20 2012 102 603 U1 ist die Verwendung einer OLED als Lichtquelle bekannt. Mit ihr wird ein Stapel aus einem transparenten Blatt, einer Druckschicht, einer Druckfarbenschutzschicht und einem Linsenarray hinterleuchtet DE102014108435 A1 offenbart eine Fahrzeugleuchte, bei der ein stereoskopisches Erscheinungsbild eines gewünschtes Musters gebildet wird.

Eine Aufgabe der Erfindung ist die Bereitstellung einer Fahrzeugleuchte mit mindestens einem zur Erfüllung wenigstens einer Lichtfunktion der Fahrzeugleuchte vorgesehenen oder einer vorgeschriebenen Lichtverteilung einer solchen Lichtfunktion beitragenden Leuchtmittel mit zumindest einer Lichtquelle, welche einer erhöhten Verkehrssicherheit beiträgt.

Die Aufgabe wird durch die Merkmale des unabhängigen Anspruchs 1 gelöst. Vorteilhafte Ausführungsformen sind in den Ansprüchen, den Zeichnungen sowie in der nachfolgenden Beschreibung, einschließlich der zu den Zeichnungen zugehörigen, wiedergegeben.

Die Erfindung kann demnach verwirklicht sein durch eine Fahrzeugleuchte mit zumindest einer Lichtquelle mindestens eines zur Erfüllung wenigstens einer Lichtfunktion der Fahrzeugleuchte vorgesehenen oder einer vorgegebenen, insbesondere vorgeschriebenen Lichtverteilung der Lichtfunktion beitragenden Leuchtmittels.

Die Fahrzeugleuchte umfasst einen im Wesentlichen von einem Leuchtengehäuse und einer Lichtscheibe umschlossenen Leuchteninnenraum.

Das mindestens eine Lichtquelle umfassende und zur Erfüllung wenigstens einer Lichtfunktion der Fahrzeugleuchte vorgesehene oder einer vorgeschriebenen Lichtverteilung einer solchen Lichtfunktion beitragende Leuchtmittel ist in dem Leuchteninnenraum beherbergt.

Um sowohl eine Tiefenwirkung, als auch eine über die Lichtscheibe hervorstehende herausspringende Wirkung bei im Vergleich zu einer konventionellen Fahrzeugleuchte, insbesondere einer Heckleuchte unveränderter Bautiefe verwirklichen zu können, sieht die Erfindung ein von mindestens einer Lichtquelle eines zur Erfüllung der entsprechenden Lichtfunktion vorgesehenen oder einer vorgegebenen Lichtverteilung der Lichtfunktion beitragenden Leuchtmittels hinterleuchtetes Rasterbild vor, welches bei einem von außerhalb des Leuchteninnenraums auf die Lichtscheibe blickenden Betrachter einen autostereoskopischen Effekt mit entsprechender Tiefenwirkung oder hervortretender Wirkung erzeugt.

Das Rasterbild zeigt den Augen eines Betrachters getrennte, unterschiedliche, stereoskopische Abbildungen von Ansichten eines Objekts, in dessen räumlicher Gestalt die Lichtfunktion dem Betrachter dann erscheint.

Die Erfindung überträgt das Prinzip des autostereoskopischen Effekts auf eine dreidimensionale Darstellung einer beispielsweise eine Warnfunktion für nachfolgende Verkehrsteilnehmer ausübenden Lichtfunktion einer als Heckleuchte ausgestalteten Fahrzeugleuchte, allem voran eine Bremslichtfunktion.

Bei der Autostereoskopie und dem hiermit verbundenen autostereoskopischen Effekt handelt es sich um eine dreidimensionale, visuelle Darstellung eines Bilds eines Objekts, wobei ein Tiefeneindruck der wiedergegebenen räumlichen Gestalt des Objekts durch stereoskopisches Sehen erhalten wird. Die Autostereoskopie benötigt keinerlei Hilfsmittel direkt vor den Augen.

Das auch als räumliches Sehen bezeichnete stereoskopische Sehen vermittelt durch eine beidäugige Betrachtung von Objekten eine echte, quantifizierbare Tiefenwahrnehmung und räumliche Wirkung des Außenraums.

Wird diese Technik des autostereoskopischen Effekts in Verbindung mit Lichtfunktionen in Fahrzeugleuchten eingesetzt, kann eine wesentlich gesteigerte Wahrnehmungskraft der Lichtfunktionen durch Erzeugung von hoher Tiefenwirkung bei geringem Bauraumbedarf erzielt werden.

Der autostereoskopische Effekt kann durch ein auch als Lentikular- oder Prismenrasterbild bezeichnetes oder bezeichenbares Linsenrasterbild erhalten werden, oder durch Parallaxenbarrieretechnik erhalten werden.

Ein auch als Lentikular- oder Prismenrasterbild bezeichnetes oder bezeichenbares Linsenrasterbild ist eine Widergabe eines Objekts, wobei mittels winziger optischer Linsen oder Prismen ein ohne optische Hilfsmittel wahrnehmbarer dreidimensionaler, räumlicher Eindruck des Objekts erzeugt wird. Dies wird auch als autostereoskopischer Effekt bezeichnet. Für ein Linsenrasterbild werden mindestens zwei Darstellungen oder Bilder des Objekts, die der Objektansicht im Augenabstand entsprechen oder im Augenabstand aufgenommen wurden, benötigt. Diese sind in Form von zwei oder mehr Bildstreifen unter jeweils einer Lentikularlinse positioniert. Die Bildstreifen erstrecken sich entlang der Lentikularlinse.

Um einen dreidimensionalen Eindruck zu erreichen, sind für einen Betrachter auch bei der Parallaxenbarrieretechnik zwei aus einer Vielzahl von Bildpunkten oder Bildstreifen zusammengesetzte Bilder gleichzeitig sichtbar, wobei mittels beispielsweise schräg gestellter Streifenmasken als Parallaxenbarrieren das Licht einzelner Bildpunkte oder Bildstreifen in verschiedene Richtungen abgelenkt wird und jedes Auge ein anderes, durch die von dem jeweiligen Auge sichtbaren Bildpunkten oder Bildstreifen erzeugtes Bild erreicht.

Das Rasterbild kann ein Linsenrasterbild umfassen, oder es kann eine Vielzahl von durch Parallaxenbarrieren voneinander getrennte Bildpunkte oder Bildstreifen umfassen.

Ein Linsenrasterbild umfasst dabei ein hinter einem Linsenraster angeordnetes Streifenbild, welches aus mehreren nebeneinander angeordneten, vertikalen Bildstreifen besteht.

Das Linsenraster besteht aus mehreren parallel nebeneinander angeordneten Lentikularlinsen.

Bei einer Lentikularlinse handelt es sich um ein langgestrecktes, linsenförmiges Element, beispielsweise als Bestandteil der Oberfläche einer hinterleuchteten Optik- oder Lichtscheibe, die durch eine Teilfläche eines Kreiszylinders gebildet oder von einer Teilfläche eines Kreiszylinders bereitgestellt sind. In einem Querschnitt normal zur Längserstreckung ist die Lentikularlinse kreisbogenförmig konvex ausgebildet.

Die Längserstreckung der Lentikularlinsen ist in eingebautem Zustand der Fahrzeugleuchte beim Blick von außerhalb des Leuchteninnenraums durch die Lichtscheibe hindurch vertikal beziehungsweise entspricht einer Anordnung normal zu einer gedachten, die Augen eines Betrachters verbindenden Linie.

Zusätzlich zu den Lentikularlinsen kann das Linsenraster Parallaxenbarrieren aufweisen.

Beim Blick auf eine vertikal angeordnete Lentikularlinse mit hinterlegten, sich parallel zur Längserstreckung der Lentikularlinse erstreckenden Bildstreifen ist für jedes Auge ein anderer Bildstreifen sichtbar.

Ein aus einzelnen Bildstreifen bestehendes Streifenbild ist hierzu so dem Linsenraster hinterlegt, dass durch die von den einzelnen Lentikularlinsen des Linsenrasters bewirkte Ablenkung jedes Auge eines Betrachters einen anderen Bildstreifen sieht beziehungsweise wahrnimmt. Die für die einzelnen Augen jeweils verschiedenen von einem Betrachter mit dessen Augen wahrgenommenen Bildstreifen ergeben gemeinsam eine stereoskopische Ansicht einer Darstellung einer räumlichen Gestalt einer Lichtfunktion gemäß eines gewünschten, dreidimensional erscheinenden Objekts.

Statt zum Erhalt eines räumlichen Eindrucks können mittels Linsenrasterbilder auch sogenannte Wechselbilder dargestellt werden, welche den optischen Effekt einer Bewegung oder eines Bildwechsels erzeugen. Diese Effekte treten auf, wenn der Blickwinkel fortschreitend verändert wird.

Bei der Parallaxenbarrieretechnik wird ein Streifenbild, welches aus mehreren parallelen, nebeneinander angeordneten Bildstreifen oder ein Punktebild aus nebeneinander angeordneten Bildpunkten hinter beispielsweise durch Streifenmasken gebildeten Parallaxenbarrieren angeordnet. Bei einer Betrachtung mit beiden Augen verhindern die Parallaxenbarrieren, dass ein Auge das vom anderen Auge gesehene und durch mehrere Bildstreifen oder Bildpunkte gebildete Teilbild sehen kann. Damit nehmen beide Augen ebenfalls unterschiedliche Teilbilder wahr, welche bei gleichzeitiger Betrachtung mit beiden Augen entsprechend dem stereoskopischen Sehen beim Betrachter einen räumlichen Eindruck erzeugen.

Zusammengefasst kann eine gewünschte Darstellung der räumlichen Gestalt zum Erhalt eines autostereoskopischen Effekts erhalten werden, indem diese entsprechend der Betrachtung beim stereoskopischen Sehen in Bildstreifen oder in Bildpunkte zerlegt wird. Die der unterschiedlichen Wahrnehmung der Augen eines Betrachters entsprechenden Bildstreifen oder Bildpunkte werden zu einem Streifenbild oder zu einem Punktebild zusammengesetzt.

Im Falle eines Linsenrasterbilds wird das Streifenbild hinter einem beispielsweise aus einem zumindest für Licht eines zumindest teilweise innerhalb eines für das menschliche Auge sichtbaren Teils des elektromagnetischen Spektrums liegenden Wellenlängenbereichs transparenten Kunststoff hergestellten Linsenraster angeordnet.

Im Falle der Parallaxenbarrieretechnik wird das Punktebild hinter einem beispielsweise aus einem zumindest für Licht eines zumindest teilweise innerhalb eines für das menschliche Auge sichtbaren Teils des elektromagnetischen Spektrums liegenden Wellenlängenbereichs transparenten Kunststoff hergestellten Parallaxenbarrierenraster angeordnet.

Das Rasterbild aus dem Streifenbild mit dem vorgesetzten Linsenraster beziehungsweise aus dem Punktebild mit vorgesetzten, beispielsweise durch Streifenmasken gebildeten Parallaxenbarrieren wird von mindestens einer Lichtquelle eines zur Erfüllung einer Lichtfunktion mit autostereoskopischer, dreidimensionaler Darstellung vorgesehenen Leuchtmittels hinterleuchtet.

Beispielsweise kann eine Optik- oder Lichtscheibe der Fahrzeugleuchte mit dem Rasterbild versehen sein und somit als dessen Träger dienen.

Dabei kann die gewünschte räumliche Darstellung einer Lichtfunktion als Rasterbild mit Streifenbild oder mit Punktebild direkt auf die Rückseite eines Kunststofflinsenrasters beispielsweise durch Laminieren aufgebracht sein.

Das Streifenbild oder Punktebild kann auf ein Trägermaterial beispielsweise aufgedruckt sein.

Das Trägermaterial, auf welchem das Streifenbild oder Punktebild beispielsweise gedruckt ist, ist wenigstens semitransparent, vorzugsweise transparent und wird rückseitig von einer Lichtquelle durchleuchtet.

Das Streifenbild oder Punktebild kann auf eine voll- oder teiltransparente Licht- oder Optikscheibe beispielsweise aufgedruckt oder auflaminiert sein.

Darüber hinaus können das Linsenraster oder die Parallaxenbarrieren auf und/oder im Trägermaterial ausgebildet sein.

Alternativ oder zusätzlich können Parallaxenbarrieren auf dem Streifenbild zwischen den benachbarten Bildstreifen oder Bildpunkten und/oder im Linsenraster zwischen benachbarten Lentikularlinsen vorgesehen sein.

Das Streifenbild oder Punktebild wird vorteilhaft gemeinsam mit der Licht- oder Optikscheibe von einer organischen Leuchtdiode (Organic Light Emitting Diode; OLED) durchleuchtet.

Eine OLED ist ein leuchtendes Dünnschichtbauelement aus organischen halbleitenden Materialien, das sich von den anorganischen LEDs dadurch unterscheidet, dass keine einkristallinen Materialien erforderlich sind. Im Vergleich zu anorganischen LEDs lassen sich OLEDs daher in kostengünstiger Dünnschichttechnik herstellen. OLEDs ermöglichen dadurch die Herstellung flächiger Lichtquellen, die einerseits sehr dünn und andererseits als durch die Lichtscheibe einer Fahrzeugleuchte hindurch sichtbare leuchtende Fläche eingesetzt einen besonders homogenes Erscheinungsbild aufweisen.

OLEDs bestehen aus wenigstens einem Stapel umfassend organisch halbleitende Materialien mit mindestens einer zwischen elektrisch leitenden, beispielsweise metallischen Schichten für Anode und Kathode eingeschlossen Emitterschicht. OLEDs weisen eine Schichtstapelhöhe in der Größenordnung von etwa 100 nm auf.

Die Verwendung von OLEDs als Lichtquellen verspricht nicht nur die selben Vorzüge wie bei der Verwendung von LEDs, sondern darüber hinausgehende Kostenvorteile.

Grundsätzlich kann vorgesehen sein, auf jeder von zwei gegenüberliegenden, beispielsweise planparallelen Oberflächen beispielsweise einer Optikscheibe oder einer Lichtquelle ein Streifenbild mit vorgesetztem Linsenraster oder Punktebild mit Parallaxenbarrieren vorzusehen. Wenn das Trägermaterial selbst leuchtet, wie beispielsweise bei einer als Lichtquelle eines zur Erfüllung wenigstens einer Lichtfunktion der Fahrzeugleuchte vorgesehenen oder einer vorgeschriebenen Lichtverteilung einer solchen Lichtfunktion beitragenden Leuchtmittels vorgesehenen OLED oder bei einer als Flächenlichtleiter mit seitlicher Lichteinkopplung ausgebildeten Optikscheibe, kann von beiden Seiten aus eine räumliche Darstellung wahrgenommen werden.

Hierdurch können unter anderem zusätzlich Fehlstellen, sogenannte Darkspots, von OLEDs kaschiert werden, wenn das Lentikularlinsenmuster des Linsenrasters entsprechend ausgelegt ist.

Die räumliche Darstellung der Lichtfunktion kann vorzugsweise Ringe, Streifen, Linien oder periodischen Strukturen umfassen. Grundsätzlich kann die räumliche Darstellung beliebige Geometrien umfassen.

Das Leuchtmittel kann zusätzlich einzeln oder in beliebiger Kombination miteinander beispielsweise zur Erzeugung und/oder zum Beitrag einer für eine Lichtfunktion gesetzlich vorgegebenen Lichtverteilung dienenden und/oder erforderlichen Lichtumlenkung mindestens einen Lichtleiter und/oder mindestens einen direkten oder indirekten Reflektor und/oder mindestens ein Linsensystem und/oder einen oder mehrere Diffusoren umfassen:
Als nicht beanspruchte Alternative könnte zwischen der Lichtquelle und der Optik- oder Lichtscheibe ein Abstand beziehungsweise ein Spalt vorgesehen sein.

Erfindungsgemäß wird das Linsenraster oder die mindestens eine Lentikularlinse oder beispielsweise durch Streifenmasken gebildete Parallaxenbarrieren direkt auf einer Lichtquelle aufgebracht, wobei als Leuchtmittel eine OLED vorgesehen ist.

Es ist ersichtlich, dass die Erfindung verwirklicht sein kann durch eine Erzeugung eines Tiefeneffektes zur besseren Wahrnehmung einer Lichtfunktion einer Fahrzeugleuchte, wie etwa einer Schlusslichtfunktion oder einer Bremslichtfunktion unter gleichzeitiger Einhaltung eines geringen Bauraumbedarfs für die Fahrzeugleuchte, insbesondere einer geringen Bauraumtiefe. Die Erfindung sieht hierbei vor, auch als Lentikular-, Prismenraster-, und Linearrasterbilder bezeichnete Linsenrasterbilder zur Erzeugung eines als dreidimensionale, räumliche Darstellung wahrgenommenen autostereoskopischen Effektes zu nutzen.

Die Fahrzeugleuchte kann alternativ oder zusätzlich einzelne oder eine Kombination mehrerer einleitend in Verbindung mit dem Stand der Technik und/oder in einem oder mehreren der zum Stand der Technik erwähnten Dokumente und/oder in der nachfolgenden Beschreibung zu den in den Zeichnungen dargestellten Ausführungsbeispielen beschriebene Merkmale aufweisen.

Zusätzliche, über die vollständige Lösung der gestellten Aufgabe und/oder über die voran zu den einzelnen Merkmalen genannten Vorteile hinausgehende technische Vorteile gegenüber dem Stand der Technik ergeben sich durch eine Verbesserung der Wahrnehmungskraft und damit der Wahrnehmbarkeit einer entsprechend verwirklichten Lichtfunktion einhergehend mit einer Erhöhung der Verkehrssicherheit.

Die Erfindung wird nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Es zeigen in schematischer Darstellung:
- Fig. 1: eine Detailansicht eines Rasterbilds in einem Querschnitt.
- Fig. 2: eine eine Lentikularlinse mit dieser hinterlegtem Bildstreifen zeigende vergrößerte Ansicht eines Rasterbilds in einem Querschnitt.

Eine erfindungsgemäße Fahrzeugleuchte umfasst einen wenigstens zum Teil von einem Leuchtengehäuse und einer Lichtscheibe umschlossenen Leuchteninnenraum.

In dem Leuchteninnenraum ist mindestens ein zur Erfüllung wenigstens einer Lichtfunktion der Fahrzeugleuchte vorgesehenes oder einer vorgeschriebenen Lichtverteilung einer solchen Lichtfunktion beitragendes Leuchtmittel mit zumindest einer Lichtquelle 02 zumindest teilweise beherbergt.

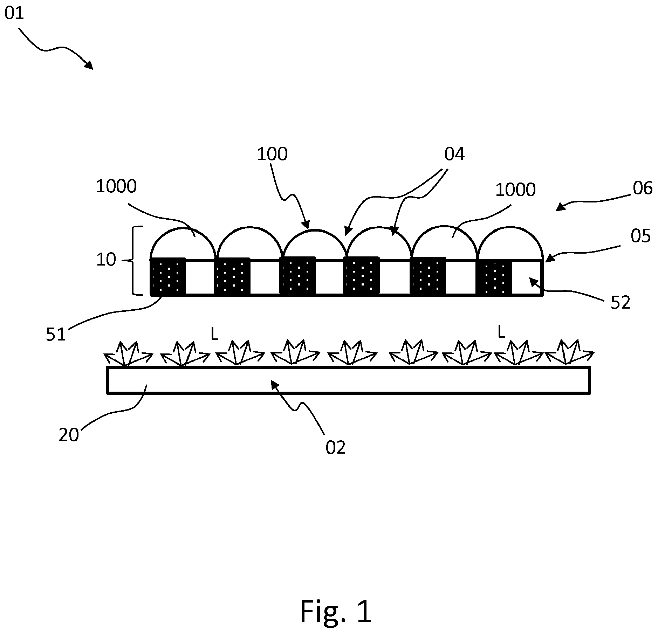

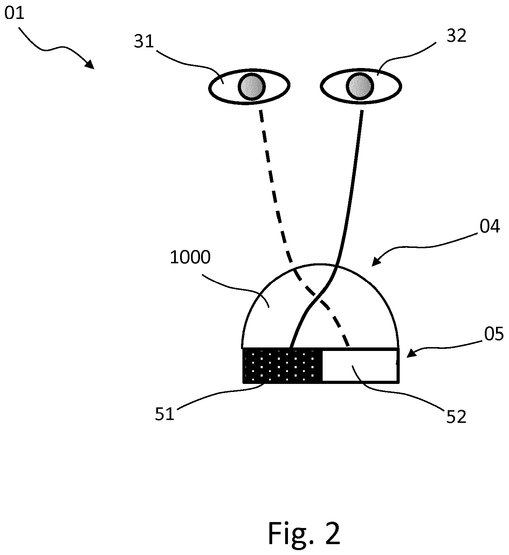

Die Fahrzeugleuchte zeichnet sich durch ein von mindestens einer Lichtquelle 02 eines zur Erfüllung der entsprechenden Lichtfunktion vorgesehenen oder einer vorgegebenen Lichtverteilung der Lichtfunktion beitragenden Leuchtmittels hinterleuchtetes, in Fig. 1, Fig. 2 ganz oder in Teilen dargestelltes Rasterbild 01 aus.

Die Erfindung kann demnach verwirklicht sein durch eine Fahrzeugleuchte mit zumindest einer Lichtquelle mindestens eines zur Erfüllung wenigstens einer Lichtfunktion der Fahrzeugleuchte vorgesehenen oder einer vorgegebenen, insbesondere vorgeschriebenen Lichtverteilung der Lichtfunktion beitragenden Leuchtmittels.

Die Fahrzeugleuchte umfasst einen im Wesentlichen von einem Leuchtengehäuse und einer Lichtscheibe umschlossenen Leuchteninnenraum.

Das mindestens eine Lichtquelle umfassende und zur Erfüllung wenigstens einer Lichtfunktion der Fahrzeugleuchte vorgesehene oder einer vorgeschriebenen Lichtverteilung einer solchen Lichtfunktion beitragende Leuchtmittel ist in dem Leuchteninnenraum beherbergt.

Um sowohl eine Tiefenwirkung, als auch eine über die Lichtscheibe hervorstehende herausspringende Wirkung bei im Vergleich zu einer konventionellen Fahrzeugleuchte, insbesondere einer Heckleuchte unveränderter Bautiefe verwirklichen zu können, sieht die Erfindung ein von mindestens einer Lichtquelle eines zur Erfüllung der entsprechenden Lichtfunktion vorgesehenen oder einer vorgegebenen Lichtverteilung der Lichtfunktion beitragenden Leuchtmittels hinterleuchtetes Rasterbild 01 vor, welches bei einem von außerhalb des Leuchteninnenraums auf die Lichtscheibe blickenden Betrachter einen autostereoskopischen Effekt mit entsprechender Tiefenwirkung oder hervortretender Wirkung erzeugt.

Das Rasterbild 01 zeigt je Auge 31, 32 eines Betrachters eine eine andere Blickwinkelansicht einer dreidimensionalen Gestalt der Lichtfunktion darstellende Abbildung.

Dies ist in Fig. 2 schematisch durch von verschiedenen Bildstreifen 51, 52 ausgehende, unterschiedliche Strahlengänge zum linken Auge 31 und zum rechten Auge 32 eines Betrachters dargestellt.

Damit sieht das linke Auge 31 eines Betrachters die Abbildung einer anderen Blickwinkelansicht der dreidimensionalen Gestalt der Lichtfunktion, als das rechte Auge 32 des Betrachters.

Das Rasterbild 01 erzeugt so bei einem von außerhalb des Leuchteninnenraums durch die Lichtscheibe hindurch blickenden Betrachter einen autostereoskopischen Effekt mit entsprechender Tiefenwirkung oder hervortretender Wirkung einhergehend mit der Wahrnehmung einer räumlichen Darstellung der durch die verschiedenen, jeweils eine andere Blickwinkelansicht einer dreidimensionalen Gestalt der Lichtfunktion darstellenden Abbildungen wiedergegebenen dreidimensionalen, räumlichen Gestalt der aktiven Lichtfunktion.

Das Rasterbild 01 zeigt den beiden Augen 31, 32 eines Betrachters getrennte, unterschiedliche, stereoskopische Abbildungen von Ansichten eines Objekts, in dessen dreidimensionaler Gestalt die Lichtfunktion dem Betrachter dann erscheint.

Die Erfindung überträgt das Prinzip des autostereoskopischen Effekts auf eine Darstellung einer dreidimensionalen Gestalt beispielsweise eine Warnfunktion für nachfolgende Verkehrsteilnehmer ausübenden Lichtfunktion einer bevorzugt als Heckleuchte ausgestalteten Fahrzeugleuchte, allem voran eine Bremslichtfunktion.

Bei der Autostereoskopie und dem hiermit verbundenen autostereoskopischen Effekt handelt es sich um eine dreidimensionale, visuelle Darstellung eines Bilds eines Objekts, wobei ein Tiefeneindruck des wiedergegebenen Objekts durch stereoskopisches Sehen erhalten wird. Die Autostereoskopie benötigt keinerlei Hilfsmittel direkt vor den Augen.

Das auch als räumliches Sehen bezeichnete stereoskopische Sehen vermittelt durch eine beidäugige Betrachtung von Objekten eine echte, quantifizierbare Tiefenwahrnehmung und räumliche Wirkung des Außenraums.

Wird diese Technik des autostereoskopischen Effekts in Verbindung mit Lichtfunktionen in Fahrzeugleuchten eingesetzt, wird eine wesentlich gesteigerte Wahrnehmungskraft der Lichtfunktionen durch Erzeugung von hoher Tiefenwirkung bei geringem Bauraumbedarf erzielt.

Die Fahrzeugleuchte trägt durch die anhand eines autostereoskopischen Effekts erzeugten Tiefenwirkung der vermittels des zur Erfüllung wenigstens einer Lichtfunktion der Fahrzeugleuchte vorgesehenen oder einer vorgeschriebenen Lichtverteilung einer solchen Lichtfunktion beitragenden Leuchtmittels und der damit einhergehenden gesteigerten Wahrnehmungskraft einer erhöhten Verkehrssicherheit bei.

Der autostereoskopische Effekt kann durch ein Rasterbild 01 erhalten werden, welches ein auch als Lentikular- oder Prismenrasterbild bezeichnetes oder bezeichenbares Linsenrasterbild 10 umfasst, beziehungsweise welches Rasterbild 01 als ein Linsenrasterbild 10 ausgebildet ist.

Ein als ein Linsenrasterbild 10 ausgebildetes Rasterbild 01 umfasst ein Linsenraster 100 aus mehreren parallel nebeneinander angeordneten Lentikularlinsen 1000 und ein hinter dem Linsenraster 100 angeordnetes Streifenbild 05 aus mehreren nebeneinander angeordneten, vertikalen Bildstreifen 51, 52.

Ein auch als Lentikular- oder Prismenrasterbild bezeichnetes oder bezeichenbares Linsenrasterbild 10 ist eine bildliche Widergabe der räumlichen Gestalt eines Objekts, wobei mittels winziger optischer Linsen 04 oder Prismen ein ohne optische Hilfsmittel wahrnehmbarer dreidimensionaler, räumlicher Eindruck des Objekts erzeugt wird. Dies wird auch als autostereoskopischer Effekt bezeichnet. Für ein Linsenrasterbild 10 werden mindestens zwei Darstellungen oder Bilder des Objekts benötigt, die der Objektansicht im Augenabstand entsprechen oder im Augenabstand aufgenommen wurden. Diese sind in Form von zwei oder mehr Bildstreifen 51, 52 unter jeweils einer Lentikularlinse 1000 positioniert. Die Bildstreifen 51, 52 erstrecken sich entlang der Lentikularlinse 1000.

Bei einer Lentikularlinse 1000 handelt es sich um ein langgestrecktes, linsenförmiges Element, beispielsweise als Bestandteil der Oberfläche einer hinterleuchteten Optik- oder Lichtscheibe 06, die durch eine Teilfläche eines Kreiszylinders gebildet oder von einer Teilfläche eines Kreiszylinders bereitgestellt sind. In einem Querschnitt normal zu ihrer Längserstreckung ist die Lentikularlinse 1000 kreisbogenförmig konvex ausgebildet.

Die Längserstreckung der Lentikularlinsen 1000 ist in eingebautem Zustand der Fahrzeugleuchte beim Blick von außerhalb des Leuchteninnenraums durch die Lichtscheibe hindurch vertikal.

Bei normaler Kopfhaltung eines Betrachters, beispielsweise eines nachfolgenden Verkehrsteilnehmers, entspricht dies einer Anordnung normal zu einer gedachten, die Augen des Betrachters verbindenden Linie.

Beim Blick auf eine vertikal angeordnete Lentikularlinse 1000 mit hinterlegten, sich parallel zur Längserstreckung der Lentikularlinse 1000 erstreckenden Bildstreifen 51, 52 ist für jedes Auge 31, 32 eines Betrachters ein anderer Bildstreifen 51, 52 sichtbar.

Das aus einzelnen Bildstreifen 51, 52 bestehende Streifenbild 05 ist hierzu so dem Linsenraster 100 hinterlegt, dass durch die von den einzelnen Lentikularlinsen 1000 des Linsenrasters 100 bewirkte Ablenkung jedes Auge 31, 32 eines Betrachters einen anderen Bildstreifen 51, 52 sieht beziehungsweise wahrnimmt.

Die für die einzelnen Augen jeweils verschiedenen von einem Betrachter mit dessen Augen 31, 32 wahrgenommenen Bildstreifen 51, 52 ergeben gemeinsam eine stereoskopische Ansicht einer Darstellung einer Lichtfunktion gemäß der räumlichen Gestalt eines gewünschten, dreidimensional erscheinenden Objekts.

Wichtig ist hervorzuheben, dass statt zum Erhalt eines räumlichen Eindrucks mittels Linsenrasterbilder auch sogenannte Wechselbilder dargestellt werden können, welche den optischen Effekt einer Bewegung oder eines Bildwechsels erzeugen. Diese Effekte treten auf, wenn der Blickwinkel fortschreitend verändert wird.

Das Streifenbild 05 kann hinter einem beispielsweise aus einem zumindest für Licht eines zumindest teilweise innerhalb eines für das menschliche Auge sichtbaren Teils des elektromagnetischen Spektrums liegenden Wellenlängenbereichs transparenten Kunststoff hergestellten Linsenraster 100 angeordnet sein.

Im Falle eines als ein Linsenrasterbild 10 ausgeführten Rasterbilds 01 ist das Streifenbild 05 bevorzugt hinter einem beispielsweise aus einem zumindest für Licht eines zumindest teilweise innerhalb eines für das menschliche Auge sichtbaren Teils des elektromagnetischen Spektrums liegenden Wellenlängenbereichs transparenten Kunststoff hergestellten Linsenraster 100 angeordnet.

Beispielsweise kann das Streifenbild 05 unmittelbar auf die Rückseite des Linsenrasters aufgebracht, beispielsweise aufgedruckt oder auflaminiert sein.

Ebenfalls wichtig ist hervorzuheben, dass das Rasterbild 01 zusätzlich zu den Lentikularlinsen 1000 Parallaxenbarrieren zwischen den benachbarten Bildstreifen 51, 52 des Streifenbilds 05 aufweisen kann.

Der autostereoskopische Effekt kann alternativ durch ein Rasterbild 01 erhalten werden, welches sich der Parallaxenbarrieretechnik bedient.

Auch bei der Parallaxenbarrieretechnik kann sich das Rasterbild 01 eines Streifenbilds 05 mit einer Vielzahl von durch Parallaxenbarrieren voneinander getrennten Bildstreifen bedienen. Die Parallaxenbarrieretechnik erlaubt darüber hinaus, dass das Rasterbild 01 ein Punktebild mit einer Vielzahl von durch Parallaxenbarrieren voneinander getrennten Bildpunkten umfasst.

Um einen dreidimensionalen Eindruck durch eine Darstellung der räumlichen Gestalt eines Objekts zu erreichen, als welches Objekt die Lichtfunktion einem Betrachter bei ihrer Aktivierung dann erscheint, sind für einen Betrachter auch bei der Parallaxenbarrieretechnik zwei aus einer Vielzahl von Bildpunkten oder Bildstreifen 51, 52 zusammengesetzte Bilder gleichzeitig sichtbar, wobei mittels beispielsweise schräg gestellter Streifenmasken als Parallaxenbarrieren das Licht einzelner Bildpunkte oder Bildstreifen 51, 52 in verschiedene Richtungen abgelenkt wird und jedes Auge 31, 32 des Betrachters ein anderes, durch die von dem jeweiligen Auge sichtbaren Bildpunkten oder Bildstreifen 51, 52 erzeugtes Bild beziehungsweise eine eine andere Blickwinkelansicht einer Darstellung der räumlichen Gestalt wiedergebende Abbildung erreicht.

Bei der Parallaxenbarrieretechnik wird ein Streifenbild 05, welches aus mehreren parallelen, nebeneinander angeordneten Bildstreifen 51, 52 besteht, oder ein Punktebild aus über- und nebeneinander angeordneten Bildpunkten hinter beispielsweise durch Streifenmasken gebildeten Parallaxenbarrieren angeordnet. Bei einer Betrachtung mit beiden Augen 31, 32 verhindern die Parallaxenbarrieren, dass das eine, linke Auge 31 eines Betrachters das vom anderen, rechten Auge 32 des Betrachters gesehene und durch mehrere Bildstreifen 51, 52 oder Bildpunkte gebildete Teilbild sehen kann. Damit nehmen beide Augen 31, 32 ebenfalls unterschiedliche Teilbilder wahr, welche bei gleichzeitiger Betrachtung mit beiden Augen entsprechend dem stereoskopischen Sehen beim Betrachter einen räumlichen Eindruck erzeugen.

Zusammengefasst kann bei der Parallaxenbarrieretechnik eine gewünschte Darstellung der räumlichen Gestalt eines Objekts zum Erhalt eines autostereoskopischen Effekts erhalten werden, indem diese entsprechend der Betrachtung beim stereoskopischen Sehen in Bildstreifen 51, 52 oder in Bildpunkte zerlegt wird. Die der unterschiedlichen Wahrnehmung der Augen 31, 32 eines Betrachters entsprechenden Bildstreifen 51, 52 oder Bildpunkte werden zu einem Streifenbild 05 oder zu einem Punktebild zusammengesetzt.

Das Streifenbild 05 oder das Punktebild kann hinter einem beispielsweise aus einem zumindest für Licht eines zumindest teilweise innerhalb eines für das menschliche Auge sichtbaren Teils des elektromagnetischen Spektrums liegenden Wellenlängenbereichs transparenten Kunststoff hergestellten Parallaxenbarrierenraster angeordnet sein.

Das Parallaxenbarrierenraster kann auf einer Optik- oder Lichtscheibe 06 aufgebracht oder in eine Optik- oder Lichtscheibe 06 eingebracht sein.

Das Streifenbild 05 oder das Punktebild kann rückseitig der Optik- oder Lichtscheibe 06 aufgebracht, beispielsweise aufgedruckt oder auflaminiert sein.

Die Lichtquelle 02 ist sowohl bei der Parallaxenbarrieretechnik, als auch beim Linsenrasterbild 10 hinter dem Streifenbild 05 oder dem Punktebild angeordnet.

Die Angabe hinter oder dahinter oder Rückseite oder hinterleuchtet bezeichnet dabei die dem Leuchteninnenraum oder der Lichtquelle 02 zugewandte und dem Betrachter abgewandte Seite beispielsweise einer Optik- oder Lichtscheibe 06.

Das Rasterbild 01 aus dem Streifenbild 05 mit dem vorgesetzten Linsenraster 100 beziehungsweise aus dem Punktebild mit vorgesetzten, beispielsweise durch Streifenmasken gebildeten Parallaxenbarrieren wird von mindestens einer Lichtquelle 02 eines zur Erfüllung einer Lichtfunktion mit autostereoskopischer, dreidimensionaler Darstellung vorgesehenen Leuchtmittels hinterleuchtet.

Dabei kann die gewünschte räumliche Darstellung einer Lichtfunktion als Rasterbild 01 mit Streifenbild 05 oder mit Punktebild direkt auf die Rückseite eines Kunststofflinsenrasters beispielsweise durch Laminieren aufgebracht sein.

Das Trägermaterial, auf welchem das Streifenbild 05 oder Punktebild beispielsweise gedruckt ist, ist wenigstens semitransparent, vorzugsweise transparent und wird rückseitig von einer Lichtquelle 02 durchleuchtet.

Beispielsweise kann eine Optik- oder Lichtscheibe 06 der Fahrzeugleuchte mit dem Rasterbild 01 versehen sein und somit als dessen Träger dienen.

Das Streifenbild 05 oder Punktebild kann auf ein Trägermaterial wie etwa eine Optik- oder Lichtscheibe 06 beispielsweise aufgedruckt sein.

Demnach kann eine Optik- oder Lichtscheibe 06 der Fahrzeugleuchte mindestens teilweise mit wenigstens einem Teil des Rasterbilds 01 versehen sein und somit zumindest teils als dessen Träger dienen.

Bevorzugt ist ein Streifenbild 05 oder ein Punktebild direkt auf eine dem Leuchteninnenraum zugewandten Rückseite einer Optik- oder Lichtscheibe 06 aufgebracht.

Das Streifenbild 05 oder Punktebild kann auf eine voll- oder teiltransparente Optik- oder Lichtscheibe 06 beispielsweise aufgedruckt oder auflaminiert sein.

Darüber hinaus können das Linsenraster 100 oder die Parallaxenbarrieren auf und/oder im Trägermaterial ausgebildet sein.

Demnach kann ein Linsenraster und/oder ein Parallaxenbarrierenraster auf und/oder in einer Optik- oder Lichtscheibe 06 ausgebildet sein.

Die Optik- oder Lichtscheibe 06 kann so das Linsenraster 100 und/oder ein Parallaxenbarrierenraster bilden oder umfassen.

Alternativ oder zusätzlich können Parallaxenbarrieren auf dem Streifenbild 05 zwischen den benachbarten Bildstreifen 51, 52 oder Bildpunkten und/oder im Linsenraster 100 zwischen benachbarten Lentikularlinsen 1000 vorgesehen sein.

Das Streifenbild 05 oder Punktebild wird vorteilhaft gemeinsam mit der Optik- oder Lichtscheibe 06 von einer beliebigen Lichtquelle 02, beispielsweise als nichtbeanspruchte Alternative von einer anorganischen Leuchtdiode (LED) oder gemäß der Erfindung von einer organischen Leuchtdiode (Organic Light Emitting Diode; OLED) durchleuchtet.

Eine OLED ist ein leuchtendes Dünnschichtbauelement aus organischen halbleitenden Materialien, das sich von den anorganischen LEDs dadurch unterscheidet, dass keine einkristallinen Materialien erforderlich sind. Im Vergleich zu anorganischen LEDs lassen sich OLEDs daher in kostengünstiger Dünnschichttechnik herstellen. OLEDs ermöglichen dadurch die Herstellung flächiger Lichtquellen, die einerseits sehr dünn und andererseits als durch die Lichtscheibe einer Fahrzeugleuchte hindurch sichtbare leuchtende Fläche eingesetzt einen besonders homogenes Erscheinungsbild aufweisen.

OLEDs bestehen aus wenigstens einem Stapel umfassend organisch halbleitende Materialien mit mindestens einer zwischen elektrisch leitenden, beispielsweise metallischen Schichten für Anode und Kathode eingeschlossen Emitterschicht. OLEDs weisen eine Schichtstapelhöhe in der Größenordnung von etwa 100 nm auf.

Die Verwendung von OLEDs als Lichtquellen 02 verspricht nicht nur die selben Vorzüge wie bei der Verwendung von LEDs, sondern darüber hinausgehende Kostenvorteile.

Grundsätzlich kann vorgesehen sein, auf jeder von zwei gegenüberliegenden, beispielsweise planparallelen Oberflächen beispielsweise einer Optikscheibe 06 oder einer Lichtquelle 02 ein Streifenbild 05 mit vorgesetztem Linsenraster 100 oder Punktebild mit Parallaxenbarrieren vorzusehen. Wenn das Trägermaterial selbst leuchtet, wie beispielsweise bei einer als Lichtquelle 02 eines zur Erfüllung wenigstens einer Lichtfunktion der Fahrzeugleuchte vorgesehenen oder einer vorgeschriebenen Lichtverteilung einer solchen Lichtfunktion beitragenden Leuchtmittels vorgesehenen OLED oder bei einer als Flächenlichtleiter mit seitlicher Lichteinkopplung ausgebildeten Optikscheibe 06, kann von beiden Seiten aus eine räumliche Darstellung wahrgenommen werden.

Hierdurch können unter anderem zusätzlich Fehlstellen, sogenannte Darkspots, von OLEDs kaschiert werden, wenn das Lentikularlinsenmuster des Linsenrasters 100 entsprechend ausgelegt ist.

Die kurz auch als räumliche Darstellung der Lichtfunktion bezeichnete Darstellung der räumlichen Gestalt eines Objekts, in dessen räumlicher Gestalt die Lichtfunktion bei deren Aktivierung durch Einschalten der Lichtquelle 02 einem Betrachter von außerhalb der Lichtscheibe aus erscheint, kann Ringe, Streifen, Linien oder periodischen Strukturen umfassen.

Grundsätzlich kann die räumliche Darstellung der Lichtfunktion beliebige Geometrien umfassen.

Das Leuchtmittel kann zusätzlich einzeln oder in beliebiger Kombination miteinander beispielsweise zur Erzeugung und/oder zum Beitrag einer für eine Lichtfunktion gesetzlich vorgegebenen Lichtverteilung dienenden und/oder erforderlichen Lichtumlenkung mindestens einen Lichtleiter und/oder mindestens einen direkten oder indirekten Reflektor und/oder mindestens ein Linsensystem und/oder einen oder mehrere Diffusoren umfassen.

Zwischen der Lichtquelle 02 und dem beispielsweise wenigstens zum Teil auf- und/oder in eine Optik- oder Lichtscheibe 06 eingebrachten Rasterbild 01 kann als nicht beanspruchte Alternative ein Abstand beziehungsweise ein Spalt vorgesehen sein.

Erfindungsgemäß wird das Linsenraster 100 oder die mindestens eine Lentikularlinse 1000 oder beispielsweise durch Streifenmasken gebildete Parallaxenbarrieren direkt auf einer Lichtquelle 02 aufgebracht, wobei als Leuchtmittel eine OLED vorgesehen ist.

Es ist ersichtlich, dass die Erfindung verwirklicht sein kann durch eine Erzeugung eines Tiefeneffektes zur besseren Wahrnehmung einer Lichtfunktion einer Fahrzeugleuchte, wie etwa einer Schlusslichtfunktion oder einer Bremslichtfunktion unter gleichzeitiger Einhaltung eines geringen Bauraumbedarfs für die Fahrzeugleuchte, insbesondere einer geringen Bauraumtiefe. Die Erfindung sieht hierbei vor, beispielsweise auch als Lentikular-, Prismenraster-, und Linearrasterbilder bezeichnete Linsenrasterbilder 10 zur Erzeugung eines als dreidimensionale, räumliche Darstellung wahrgenommenen autostereoskopischen Effektes zu nutzen.

Bei der Lichtquelle 02 handelt es sich bevorzugt um eine ihr Licht wie in Fig. 1 durch Pfeile L dargestellt diffus abstrahlende Flächenlichtquelle 20.

Die Erfindung ist insbesondere im Bereich der Herstellung von Fahrzeugleuchten, insbesondere Kraftfahrzeugleuchten gewerblich anwendbar.

Die Erfindung wurde unter Bezugnahme auf bevorzugte Ausführungsformen beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Rasterbild
- 02: Lichtquelle
- 04: Linse
- 05: Streifenbild
- 06: Optik- oder Lichtscheibe
- 10: Linsenrasterbild
- 20: Flächenlichtquelle
- 31: linkes Auge eines Betrachters
- 32: rechtes Auge eines Betrachters
- 51: Bildstreifen
- 52: Bildstreifen
- 100: Linsenraster
- 1000: Lentikularlinse

- L: Pfeil

## Patentansprüche

1. Fahrzeugleuchte mit einen wenigstens zum Teil von einem Leuchtengehäuse und einer Lichtscheibe umschlossenen Leuchteninnenraum und mindestens einem in dem Leuchteninnenraum zumindest teilweise beherbergten, zur Erfüllung wenigstens einer Lichtfunktion mit einer gesetzlich vorgegebenen Lichtverteilung der Fahrzeugleuchte vorgesehenen oder einer vorgeschriebenen Lichtverteilung einer solchen Lichtfunktion beitragenden Leuchtmittel mit zumindest einer Lichtquelle (02), umfassend ein von mindestens einer Lichtquelle (02) eines zur Erfüllung der entsprechenden Lichtfunktion vorgesehenen oder einer vorgegebenen Lichtverteilung der Lichtfunktion beitragenden Leuchtmittels hinterleuchtetes Rasterbild (01), welches bei einem von außerhalb des Leuchteninnenraums durch die Lichtscheibe hindurch blickenden Betrachter einen autostereoskopischen Effekt mit entsprechender Tiefenwirkung oder hervortretender Wirkung einhergehend mit der Wahrnehmung einer räumlichen Gestalt der Lichtfunktion erzeugt, wobei das Rasterbild von einer organischen Leuchtdiode als Leuchtmittel (02, 20) durchleuchtet wird und das Rasterbild direkt auf der Lichtquelle (02, 20) aufgebracht ist.

2. Fahrzeugleuchte nach Anspruch 1, wobei das Rasterbild (01) ein Linsenrasterbild (10) mit einem Linsenraster (100) aus mehreren parallel nebeneinander angeordneten Lentikularlinsen (1000) und einem hinter dem Linsenraster (100) angeordneten Streifenbild (05) aus mehreren nebeneinander angeordneten, Bildstreifen (51, 52) umfasst.

3. Fahrzeugleuchte nach Anspruch 2, wobei das Rasterbild (01) Parallaxenbarrieren zwischen den benachbarten Bildstreifen (51, 52) des Streifenbilds (05) aufweist.

4. Fahrzeugleuchte nach Anspruch 2 oder 3, wobei das Streifenbild hinter einem aus einem transparenten Kunststoff hergestellten Linsenraster angeordnet ist.

5. Fahrzeugleuchte nach Anspruch 1, wobei das Rasterbild (01) ein Streifenbild (05) oder ein Punktebild mit einer Vielzahl von durch Parallaxenbarrieren voneinander getrennten Bildstreifen (51, 52) oder Bildpunkten umfasst.

6. Fahrzeugleuchte nach Anspruch 5, wobei das Streifen- oder Punktebild hinter einem aus einem transparenten Kunststoff hergestellten Parallaxenbarrierenraster angeordnet ist.

7. Fahrzeugleuchte nach einem der voranstehenden Ansprüche, wobei eine Optik- oder Lichtscheibe (06) der Fahrzeugleuchte mindestens teilweise mit wenigstens einem Teil des Rasterbilds (01) versehen ist.

8. Fahrzeugleuchte nach Anspruch 7, wobei ein Streifenbild (05) oder ein Punktebild direkt auf eine dem Leuchteninnenraum zugewandten Rückseite einer Optik- oder Lichtscheibe (06) aufgebracht ist.

9. Fahrzeugleuchte nach Anspruch 7 oder 8, wobei ein Linsenraster (100) und/oder ein Parallaxenbarrierenraster auf und/oder in einer Optik- oder Lichtscheibe (06) ausgebildet ist.

10. Fahrzeugleuchte nach einem der voranstehenden Ansprüche, wobei die räumliche Darstellung der Lichtfunktion Ringe, Streifen, Linien oder periodischen Strukturen umfasst.

## Claims

1. A vehicle lamp with a lamp interior, which is at least partly enclosed by a lamp housing and a light lens, and at least one lighting means with at least one light source (02), which lighting means is at least partly accommodated in the lamp interior, and which lighting means is provided to fulfill at least one light function with a legally specified light distribution of the vehicle lamp, or which lighting means contributes to a mandatory light distribution of such a light function, comprising a raster image (01), which is backlit by at least one light source (02) of a lighting means provided to fulfill the corresponding light function or contributing to a specified light distribution of the light function, which raster image (01) produces, on a viewer looking through the light lens from outside of the lamp interior, an autostereoscopic effect with the corresponding depth effect or protruding effect involved in the perception of a spatial shape of the light function, wherein the raster image is illuminated by an organic light-emitting diode as lighting means (02, 20), and the raster image is applied directly onto the light source (02, 20).

2. The vehicle lamp according to claim 1, wherein the raster image (01) comprises a lenticular image (10) with a lenticular grid (100) of a plurality of lenticular lenses (1000) arranged parallel next to each other and, arranged behind the lenticular grid (100), a strip image (05) of a plurality of image strips (51, 52) arranged next to each other.

3. The vehicle lamp according to claim 2, wherein the raster image (01) has parallax barriers between the adjacent image strips (51, 52) of the strip image (05).

4. The vehicle lamp according to claim 2 or 3, wherein the strip image is arranged behind a lenticular grid produced from a transparent synthetic material.

5. The vehicle lamp according to claim 1, wherein the raster image (01) comprises a strip image (05) or a point image with a multitude of image strips (51, 52) or pixels separated from one another by parallax barriers.

6. The vehicle lamp according to claim 5, wherein the strip image or point image is arranged behind a parallax barrier grid produced from a transparent synthetic material.

7. The vehicle lamp according to one of the previous claims, wherein an optical lens or light lens (06) of the vehicle lamp is at least partly provided with at least a part of the raster image (01).

8. The vehicle lamp according to claim 7, wherein a strip image (05) or a point image is applied directly onto the back side of an optical lens or light lens (06) facing towards the lamp interior.

9. The vehicle lamp according to claim 7 or 8, wherein a lenticular grid (100) and/or a parallax barrier grid is formed on and/or in an optical lens or light lens (06).

10. The vehicle lamp according to one of the previous claims, wherein the spatial representation of the light function comprises rings, strips, lines, or periodic structures.

## Revendications

1. Phare de véhicule doté d'un espace intérieur de phare entouré au moins partiellement d'un boîtier de phare et d'un diffuseur, et au moins d'une ampoule, qui est au moins partiellement hébergée dans ledit espace intérieur, prévue pour remplir au moins une fonction d'éclairage avec une répartition lumineuse dudit phare de véhicule telle qu'imposée par la loi, ou participant à une répartition lumineuse prescrite d'une telle fonction d'éclairage, avec au moins une source lumineuse (02), comprenant une image tramée (01) illuminée de l'arrière par au moins une source lumineuse (02) d'une ampoule, prévue pour remplir ladite fonction lumineuse correspondante ou participant à une répartition lumineuse prescrite de ladite fonction d'éclairage, laquelle génère, lorsque observée par une personne regardant de l'extérieur de l'espace intérieur de phare au travers du diffuseur, un effet auto stéréoscopique à effet de profondeur correspondant ou effet saillant accompagnant l'impression d'une configuration spatiale de la fonction d'éclairage, ladite image tramée étant éclairée de part en part par une diode électroluminescente organique servant d'ampoule (02, 20) et ladite image tramée étant appliquée directement sur la source lumineuse (02, 20).

2. Phare de véhicule selon la revendication 1, l'image tramée (01) comprenant une image tramée lenticulaire (10) dotée d'une trame lenticulaire (100) constituée de plusieurs objectifs lenticulaires (1000) agencés parallèlement les uns à côté des autres, et d'une image à rayures (05) agencée derrière la trame lenticulaire (100), constituée de plusieurs bandes d'image (51, 52) agencées les unes à côté des autres.

3. Phare de véhicule selon la revendication 2, l'image tramée (01) présentant des barrières parallaxes entre lesdites bandes d'image (51, 52) voisines de l'image à rayures (05).

4. Phare de véhicule selon la revendication 2 ou 3, l'image à rayures étant agencée derrière une trame lenticulaire réalisée en matière plastique transparente.

5. Phare de véhicule selon la revendication 1, l'image tramée (01) comprenant une image à rayures (05) ou une image de points dotée d'une pluralité de bandes d'image (51, 52) ou de points d'image séparés les un(e)s des autres par des barrières parallaxes.

6. Phare de véhicule selon la revendication 5, l'image à rayures ou à points étant agencée derrière une trame à barrière parallaxe réalisée en matière plastique transparente.

7. Phare de véhicule selon l'une quelconque des revendications précédentes, un disque optique ou diffuseur (06) du phare de véhicule étant muni au moins partiellement d'au moins une partie de l'image tramée (01).

8. Phare de véhicule selon la revendication 7, une image à rayures (05) ou une image à points étant appliquée directement sur une face arrière d'un disque optique ou diffuseur (06) tournée vers l'espace intérieur de phare.

9. Phare de véhicule selon la revendication 7 ou 8, une trame lenticulaire (100) et/ou une trame à barrière parallaxe étant constituée sur et/ou dans un disque optique ou diffuseur (06).

10. Phare de véhicule selon l'une quelconque des revendications précédentes, la représentation spatiale de la fonction d'éclairage comprenant des anneaux, des bandes, des lignes ou des structures périodiques.
